# EUROPÄISCHE PATENTANMELDUNG

(11) **EP 2 992 990 A1**
(43) Veröffentlichungstag der Anmeldung: **09.03.2016**
(21) Anmeldenummer: 14183850.8
(22) Anmeldetag: 05.09.2014
(51) Int. Cl.: B23D 65/00

(54) **Verfahren zur Herstellung eines Vormaterials für ein Zerspanungswerkzeug**

(71) Anmelder: Böhler-Uddeholm Precision Strip GmbH, 3333 Böhlerwerk (AT)
(72) Erfinder: Harrer, Manfred, 4020 Linz (AT)
(74) Vertreter: Reitstötter Kinzebach

(57) **Zusammenfassung**

Die Anmeldung betrifft ein Verfahren zur Herstellung eines Vormaterials für ein Zerspanungswerkzeug, insbesondere eines Vormaterials für ein Sägeblatt oder ein Sägeband, bei welchem man kontinuierlich einen bandförmigen Träger (10) aus einem metallischen Trägermaterial und einen Draht (13) aus Schnellarbeitsstahl entlang einer Seitenkante (11) des bandförmigen Trägers (10) zusammenführt und in eine Schweißeinrichtung transportiert und den bandförmigen Träger (10) mit dem Draht (13) zur Erzeugung eines Bimetallbandes entlang der Seitenkante (11) des Trägers (10) verschweißt, wobei man den bandförmigen Träger (10) und den Kantendraht (13) mit wenigstens einer ersten Schweißeinrichtung (15), die auf einer Seite (14) des bandförmigen Trägers (10) angeordnet ist, und wenigstens einer zweiten Schweißeinrichtung (17), die auf der gegenüberliegenden Seite (16) des bandförmigen Trägers (10) angeordnet ist, miteinander verschweißt.

## Beschreibung

Die vorliegende Erfindung betrifft ein Verfahren zur Herstellung eines Vormaterials für ein Zerspanungswerkzeug, insbesondere eines Vormaterials für ein Sägeblatt oder ein Sägeband.

Zerspanungswerkzeuge, wie beispielsweise Sägen zur Holz- oder Metallbearbeitung, müssen eine ganze Reihe von Anforderungen erfüllen, um ökonomisch verwendbar zu sein. So muss das Sägeblatt oder Sägeband aus einem flexiblen und elastischem Material bestehen, denn es muss nicht nur die Zugspannungen aufnehmen können, denen das Sägeband schon von seiner Montage her ausgesetzt ist, sondern es muss darüber hinaus auch die das Sägeband oder Sägeblatt auf Biegung beanspruchenden Kräfte während des Sägevorgangs und die entsprechenden Torsionsmomente und -Spannungen ertragen können, die beispielsweise ein Sägeband bei der Drehung um seine Längsachse oberhalb und unterhalb des Schneidetisches bzw. vor und nach der Schneidstelle erfährt. Hinzu kommen dynamische Belastungen, die durch den Eingriff der einzelnen Zähne in das zu bearbeitende Material entstehen und nicht zuletzt thermische Belastungen durch Temperaturen, die im Betrieb im Zahnbereich und insbesondere an den Zahnspitzen 600°C und mehr erreichen können. Da die Kühlung des Bandes eine Abfuhr dieser Wärme bewirkt, kommt es nicht nur zu thermischen Belastungen, sondern auch zur Ausbildung von Temperaturgradienten und den damit zusammenhängenden thermischen Spannungen, die sich den mechanischen und insbesondere den dynamischen Spannungen überlagern.

Da sich die Anforderungen hinsichtlich Zähigkeit und Biegefestigkeit des Sägeblattes oder -bandes einerseits und die Warmhärte und Verschleißfestigkeit der Säge andererseits durch ein einzelnes Material, beispielsweise ein Metall oder eine Metalllegierung, nur unzureichend realisieren lassen, werden als Ausgangskomponenten bzw. Vormaterial für Zerspanungswerkzeuge bevorzugt sogenannte Bimetallbänder oder Bimetallblätter eingesetzt. Derartige Bimetallbänder- oder -blätter bestehen üblicherweise aus einem flächigen Träger aus einem Trägermaterial, welches die nötige Zähigkeit und Biegefestigkeit für das spätere Zerspanungswerkzeug aufweist, beispielsweise einem Träger aus niedriglegierten Stählen oder auch aus Kohlenstoffstahl. Auf eine schmale Kante des flächigen Trägers wird dann ein Kantendraht aus einem Schneidenmaterial geschweißt, welches eine höhere Verschleißfestigkeit und eine höhere Warmhärte aufweist. Typischerweise wird als Schneidenmaterial ein Schnellarbeitsstahl (HSS) verwendet.

Aus diesem Vormaterial stellt der Sägehersteller dann das Sägeblatt oder Sägeband her. Dazu wird an der Kante des flächigen Trägers an der sich der angeschweißte Schnellarbeitsstahldraht befindet, das Zahnprofil des späteren Sägeblattes oder - bandes herausgearbeitet, beispielsweise herausgefräst oder herausgeschliffen. Auf diese Weise entstehen Zähne mit einem Spitzenbereich aus Schnellarbeitsstahl, wobei der Rest des Sägeblattes oder -bandes aus dem zähfesten elastischen Stahl des flächigen Träger besteht. Je nach Anforderungsprofil der Säge können die Zähne vollständig aus Schneidenmaterial bestehen, bevorzugt bestehen jedoch nur die Zahnspitzen aus Schneidenmaterial, während der Zahnfuß in dem flächigen Träger hinabreicht und somit aus dem zähfesten elastischen Trägermaterial besteht. Dies bedeutet aber auch, dass sich die Schweißverbindung zwischen dem Trägermaterial und dem Schneidenmaterial typischerweise im Zahnbereich befinden kann.

Zur Herstellung eines derartigen Bimetall-Vormaterials für ein Zerspannungswerkzeug wird üblicherweise kontinuierlich ein bandförmiger Träger aus dem metallischen Trägermaterial und ein Draht aus dem Schnellarbeitsstahl entlang einer Seitenkante des bandförmigen Trägers zusammengeführt und in eine Schweißeinrichtung transportiert, in welcher der bandförmige Träger mit dem Draht zur Erzeugung eines Bimetallbandes entlang der Seitenkante des Trägers verschweißt wird. Üblicherweise wird dazu ein auf einer Seite des zu verschweißenden Verbundes angeordneter Laserschweißkopf verwendet, der in einem Tiefschweißverfahren eine zusatzwerkstofffreie Verbindung zwischen dem bandförmigen Träger und dem Kantendraht aus Schnellarbeitsstahl herstellt. Alternativ zum Laserschweißen können auch andere Schweißverfahren, wie beispielsweise Elektronenstrahlschweißverfahren, zum Einsatz kommen.

Die typischerweise im Zahnbereich befindliche Schweißverbindung zwischen Trägermaterial und Schnellarbeitsstahl kann jedoch fertigungstechnisch und metallurgisch eine Problemzone darstellen. Einerseits soll eine vollkommene Verschweißung der Schmalseiten des bandförmigen Trägers und des Draht erreicht werden, andererseits sind unerwünschte Überhöhungen der Schweißnaht bzw. eine Bildung einer störenden erhabenen Schweißraupe zu vermeiden. Zudem weist die Schweißnaht bzw. der Mischungsbereich der verschiedenen Materialien, der bei der Schweißung gebildet wird, typischerweise eine geringe Zähigkeit und einen hohen Formänderungswiderstand auf.

Insbesondere bei der Verwendung eines Schnellarbeitsstahls als Schneidenmaterial lässt sich herstellungstechnisch die Ausbildung einer Schweißnahtüberhöhung bzw. Schweißraupe fertigungstechnisch nicht verhindern. Eine solche Schweißraupe ist sowohl bei der weiteren Verarbeitung bereits hinderlich, als auch im späteren Einsatz als Sägeband bzw. Sägeblatt aufgrund der erhöhten Reibung mit dem zu bearbeitenden Material problematisch. Es ist daher üblich, nach dem Verschweißen des Trägermaterials mit dem Schnellarbeitsstahldraht das erzeugte Bimetallband in einem sogenannten Dressierprozess zu walzen bzw. dickenmäßig zu justieren. Dabei werden jedoch die erhabenen Bereiche der Schweißraupen an den Bandoberflächen mit erhöhter Verformung in den vorbestimmten Bandquerschnitt gedrückt. Dadurch können Einziehungen des Materials beiderseits der eingewalzten Volumenbereiche im Band verursacht werden, was zur Ausbildung von Längsriefen beiderseits der verformten Schweißraupen im Band führt. Die Ausbildung derartiger Längsriefen durch das Dressieren ist beispielsweise in den Figuren 1 bis 3 der österreichischen Patentschrift AT 411 581 B dargestellt. Eine derartige Nachbearbeitung der Schweißnaht wird auch in der deutschen Patentanmeldung DE 19501442 A1 beschrieben. Zur Vermeidung derartiger Längsriefen wird in diesem Dokument vorgeschlagen, nach dem Verschweißen die überhöhten Bereiche der Schweißnaht bzw. der Schweißraupe durch eine spanabhebende Bearbeitung der Oberfläche des Bimetallbandes, beispielsweise durch Schleifen, abzutragen. Dadurch wird erreicht, dass in nachfolgenden Dressierprozessen kein überstehendes Material mehr in den Querschnitt des Bimetallbandes gedrückt wird, so dass auch keine Längsriefen mehr entstehen.

Diese Längsriefen haben nämlich den Nachteil, dass nach dem Ausarbeiten der Zahnlücken und dem Auslenken einzelner Zahnsegmente aus der Ebene des späteren Sägeblattes oder -bandes (Schränken), die Riefen im Zahnbereich eine erhöhte Spannung im Kerbgrund bewirken können, wodurch die Gefahr einer Rissinitation gegeben ist, welche im praktischen Betrieb der Säge Zahnspitzenausbrüche verursachen und eine Verkürzung der Lebensdauer der Säge bewirken kann. Die in AT 411 581 B vorgeschlagene spanabhebende Bearbeitung des Bimetallbandes verteuert jedoch den Herstellungsprozess. Gerade bei einfacheren Sägeblätter und -bänder besteht jedoch ein derart hoher Wettbewerbsdruck, dass Maßnahmen, welche die Herstellungskosten erhöhen, wo immer möglich vermieden werden müssen.

Der vorliegenden Erfindung liegt daher das technische Problem zugrunde, ein Verfahren zur Herstellung eines Vormaterials für ein Zerspanungswerkzeug der oben beschriebenen Art anzugeben, welches auf kostengünstige Weise ermöglicht, Bimetallbänder herzustellen, bei denen die beschriebene Riefenbildung ohne spanabhebende Nachbearbeitung der Schweißverbindung vermieden werden kann, damit qualitativ hochwertige Sägeblätter oder Sägebänder auf kostengünstige Art und Weise hergestellt werden können.

Gelöst wird dieses technische Problem durch das Verfahren des vorliegenden Anspruchs 1. Vorteilhafte Weiterbildungen des erfindungsgemäßen Verfahrens sind Gegenstände der abhängigen Verfahrensansprüche.

Die Erfindung betrifft demnach ein Verfahren zur Herstellung eines Vormaterials für ein Zerspanungswerkzeug, insbesondere eines Vormaterials für ein Sägeblatt oder ein Sägeband, bei welchem man kontinuierlich einen bandförmigen Träger aus einem metallischen Trägermaterial und einen Draht aus Schnellarbeitsstahl entlang einer Seitenkante des bandförmigen Trägers zusammenführt und in eine Schweißeinrichtung transportiert und den bandförmigen Träger mit dem Draht zur Erzeugung eines Bimetallbandes entlang der Seitenkante des Trägers verschweißt, wobei das erfindungsgemäße Verfahren dadurch gekennzeichnet ist, dass man den bandförmigen Träger und den Kantendraht mit wenigstens einer ersten Schweißeinrichtung, die auf einer Seite des bandförmigen Trägers angeordnet ist, und wenigstens einer zweiten Schweißeinrichtung, die auf der gegenüberliegenden Seite des bandförmigen Trägers angeordnet ist, miteinander verschweißt.

Der Erfindung liegt die Überlegung zugrunde, dass durch den Einsatz von wenigstens zwei Schweißeinrichtungen, die auf gegenüberliegenden Seiten des zu verschweißenden Verbundes aus bandförmigem Träger und HSS-Draht angeordnet sind, die von der einzelnen Schweißeinrichtungen einzubringende thermische Energie drastisch reduziert werden kann, so dass ein Schweißen des Werkstoffverbundes mit geringerem, auf die jeweilige Oberfläche wirkenden Energieeintrag möglich ist. Auf diese Weise kann die Ausbildung einer Schweißnahtüberhöhung oder einer Schweißraupe deutlich verringert und an beiden Bandseiten vergleichbar ausgestaltet werden.

Doppelseitige Schweißverfahren von Blechen oder Bändern sind aus dem Stand der Technik zwar schon lange bekannt, allerdings werden derartige Verfahren üblicherweise bei technologisch aufwändigen Prozessen, wie dem Verschweißen von laminierten Verbundmaterialien, beschichteten Materialien oder Blechen aus schweißtechnisch anspruchsvolleren Materialien, wie beispielsweise Leichtmetalllegierungen, eingesetzt (vgl. beispielsweise DE 10 2010 007 573 B4 oder DE 101 31 883 B4). Für die Herstellung von Bimetallbändern für Sägeblätter oder Sägebänder würde der Fachmann ein solches Verfahren jedoch nicht in Betracht ziehen, da der Einsatz von wenigstens zwei auf gegenüberliegenden Seiten des flächigen Trägers angeordneten Schweißeinrichtungen technologisch aufwändiger und somit teurer ist als die bisher bei der Herstellung von Bimetallbändern eingesetzten einseitigen Schweißverfahren. Der Fachmann würde daher erwarten, dass die auf diese Weise hergestellten Bimetallbänder für die Herstellung von Sägeblättern nicht mehr zu konkurrenzfähigen Preisen angeboten werden können.

Überraschend wurde jedoch gefunden, dass trotz des aufwändigeren Schweißverfahrens letztlich eine Kostenreduzierung möglich ist, denn zum einen kann die Produktivität erhöht werden, und zum anderen hat sich überraschend gezeigt, dass die Schweißnahtüberhöhungen bzw. die Ausbildung von Schweißraupen mit erfindungsgemäßen Verfahren so gering sind, dass auch ohne spanabhebende Nachbearbeitung der Schweißverbindung in späteren Bearbeitungsschritten, wie dem Dressieren des Bandes, keine Längsriefen mehr auftreten, so dass qualitative hochwertige Sägeblätter und -bänder auch ohne Abschleifen der Schweißverbindung erzeugt werden können. Dieses überraschende Ergebnis war aus dem vorhandenen Stand der Technik zum doppelseitigen Schweißen von Metallblechen bzw. -bändern nicht vorhersehbar. Zudem kann so eine Verringerung der Schweißnahtspannungen bzw. eine Verringerung von Heißrissen bei schwierigen Werkstoffkombinationen erreicht werden. Außerdem können neue Produkte hergestellt werden, bei welchen die Oberraupen nicht mehr eingeebnet werden müssen.

Das erfindungsgemäße Verfahren weist weitere Vorteile auf:
Aufgrund des von beiden Seiten des flächigen Trägers her stattfindenden Schweißvorgangs erhält man eine wesentlich symmetrischere Ausbildung der Schweißnaht. Daraus resultiert ein gleichmäßigeres Verhalten beim späteren Schränken der Zähne des Sägeblattes oder des Sägebandes, was wiederum beim Sägen eine gleichmäßigere Krafteinleitung der Zerspanungskräfte in das Sägeband ermöglicht.
Ferner können durch eine Reduktion der Einschweißtiefe, vorzugsweise auf die halbe Materialstärke, die physikalischen Grenzen des Tiefschweißens umgangen werden und so beispielsweise die Breite der Schweißnaht verringert werden. Speziell für die Herstellung von kleinen Verzahnungsvarianten ist eine geringe Schweißnahtbreite von größter Wichtigkeit, denn einerseits sollte die Schweißnaht immer im Zahnbereich liegen und andererseits wird ein möglichst großer HSS-Anteil gefordert, weil bei entsprechend großer HSS-Höhe auch die Länge der einzelnen Schweißnaht pro Zahn entsprechend lang wird und so die Scherstabiltität gegenüber Zahnausbruch positiv beeinflusst wird.

Die erfindungsgemäß vorgesehenen wenigstens zwei Schweißeinrichtungen können sich direkt gegenüberliegen oder auch in Transportrichtung des bandförmigen Trägers gegeneinander versetzt sein. Im letzteren Fall wird vorteilhaft verhindert, dass sich die Schweißeinrichtungen gegenseitig beschädigen können. Wenn sich die beiden Schweißeinrichtungen direkt gegenüberliegen, kann man auch die Ausrichtung der Schweißeinrichtungen so anordnen, dass der Energieeintrag nicht senkrecht, sondern leicht schräg zur Oberfläche des Trägers erfolgt, so dass auch in diesem Fall eine gegenseitige Beschädigung weitgehend ausgeschlossen werden kann.

Das erfindungsgemäße Verfahren kann mit unterschiedlichsten Schweißeinrichtungen durchgeführt werden, vorzugsweise handelt es sich jedoch um Elektronenstrahlschweißeinrichtungen oder, besonders bevorzugt um Laserschweißeinrichtungen.

Gemäß einer bevorzugten Ausführungsform des erfindungsgemäßen Verfahrens ist die Leistung der Schweißeinrichtungen steuerbar oder regelbar. Beispielsweise kann man den beim Verschweißen häufiger auftretenden thermischen Verzug aufgrund Querschrumpfung und der sich daraus resultierenden Winkelstellung, den sogenannten Winkelverzug, des verschweißten Verbundes aus Träger und Draht erfassen und den Energieeintrag der sich gegenüberliegenden ersten und zweiten Schweißeinrichtung so anpassen, dass der Winkelverzug minimiert wird. D.h die resultierende Querschrumpfung der zweiten Schweißeinrichtung ist auf die Querschrumpfung der ersten Schweißeinrichtung abgestimmt.

Aufgrund der überraschend geringen Schweißnahtüberhöhung, die beim erfindungsgemäßen Verfahren beim Verschweißen des Trägers mit dem HSS-Draht auftritt, kann auf eine spanabhebende Bearbeitung des Bimetallbandes vor einem gegebenenfalls vorgesehen Dressieren des Bandes verzichtet werden. Für einzelne Anwendungsfälle kann sogar auf ein Dressieren des Bimetallbandes verzichtet werden, was zu einem besonders kostengünstigen Herstellungsverfahren führt.

Die Erfindung betrifft schließlich auch ein Sägeblatt oder Sägeband, das aus einem Vormaterial besteht, welches nach dem erfindungsgemäßen Verfahren hergestellt ist. Das Schneidteil des Sägeblattes oder -bandes besteht dabei aus einem Schnellarbeitsstahl (HSS).

Für ein Sägeblatt oder Sägeband wird ein Trägermaterial mit folgender Zusammensetzung verwendet (Angaben in Gew.%):

| | |
|---|---|
| Kohlenstoff (C) | 0,2 bis 1,5 |
| Silicium (Si) | bis 2,0 |
| Mangan (Mn) | bis 2,0 |
| Chrom (Cr) | bis 7,0 |
| Molybdän (Mo) | bis 3,0 |
| Nickel (Ni) | bis 1,5 |
| Vanadium (V) | bis 0,6 |
| Wolfram (W) | bis 5,0 |

Eisen (Fe) und erschmelzungsbedingte Begleitelemente und Verunreinigungen als Rest.;
und dieses Trägermaterial mit einem Schneidmaterial mit folgender Zusammensetzung kombiniert wird (Angaben in Gew.%):

| | |
|---|---|
| Kohlenstoff (C) | 0,5 bis 2,5 |
| Silicium (Si) | bis 1,5 |
| Mangan (Mn) | bis 0,8 |
| Chrom (Cr) | 2 bis 6,0 |
| Molybdän (Mo) | bis 11,0 |
| Vanadium (V) | bis 10,0 |
| Wolfram (W) | bis 20,0 |
| Cobalt (Co) | bis 15,0 |

Eisen (Fe) und erschmelzungsbedingte Begleitelemente und Verunreinigungen als Rest,
wobei der Anteil der Elemente Si+V+Mo+W/2 > 5 Gew.% beträgt.

Die Erfindung wird im Folgenden unter Bezugnahme auf ein in der beigefügten Zeichnung dargestelltes Ausführungsbeispiel näher erläutert.

In der Zeichnung zeigt:
- Fig. 1: eine schematische Darstellung des Verschweißens eines bandförmigen flächigen Trägers mit einem HSS-Draht nach dem erfindungsgemäßen Verfahren;
- Figur 2: einen schematischen Querschnitt einer mit einem herkömmlichen Verfahren des Standes der Technik hergestellten Schweißverbindung.
- Figur 3: einen schematischen Querschnitt einer nach dem erfindungsgemäßen Verfahren hergestellten Schweißverbindung.

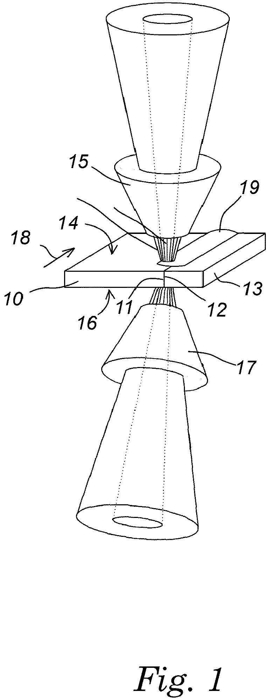

In Figur 1 ist beispielhaft eine Ausführungsform des erfindungsgemäßen Verfahrens zur Herstellung eines Vormaterials für ein Zerspanungswerkzeug schematisch dargestellt. Man erkennt einen ersten flächigen Träger 10, der mit seiner Kante 11 an der Kante 12 eines als Kantdraht ausgebildeten HSS-Drahts 13 angeordnet ist. Im dargestellten Beispiel sind der flächige Träger und der HSS-Draht der besseren Übersichtlichkeit halber als kurze Abschnitte dargestellt. Vorzugsweise handelt es sich aber um Endlosbänder, die beispielsweise von hier ebenfalls nicht dargestellten Spulen abgewickelt werden.

Oberhalb der Oberseite 14 des bandförmigen Trägers ist eine erste Laserschweißvorrichtung 15 angeordnet und unterhalb der Unterseite 16 des bandförmigen Trägers ist eine zweite Laserschweißvorrichtung 17 angeordnet. Der flächige Träger 10 und der HSS-Draht 13 werden in der durch den Pfeil 18 angedeuteten Richtung unter den Laserschweißeinrichtungen 15 und 17 hindurchtransportiert. Es entsteht eine Schweißverbindung 19 zwischen dem flächigen Träger 10 und dem HSS-Draht 13.

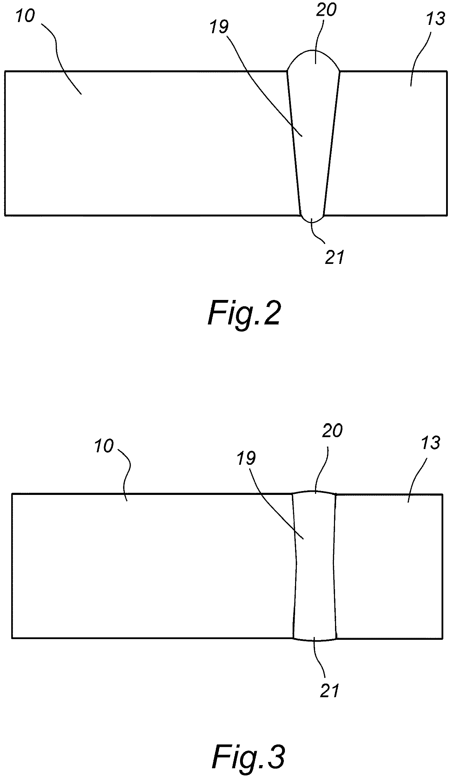

Figur 2 zeigt einen schematischen Querschnitt einer mit einem herkömmlichen Verfahren des Standes der Technik hergestellten Schweißverbindung. Zwischen dem Träger 10 und dem HSS-Draht 13 wurde die in Figur 1 dargestellte Schweißverbindung 19 mittels einer nur auf die Oberseite des Trägers wirkenden Laserstrahleinrichtung erzeugt. Man erkennt sowohl die Ausbildung einer ausgeprägten Oberraupe 20 als auch die Ausbildung, einer etwas geringer ausgeprägten Unterraupe 21. Ferner hat die Schweißverbindung ein leicht keilförmiges Profil, ist also an der Oberseite breiter als an der Unterseite.

Im Gegensatz dazu, ist in Figur 3 ein schematischer Querschnitt einer nach dem erfindungsgemäßen Verfahren hergestellten Schweißverbindung 19 dargestellt. Man erkennt, dass einerseits sowohl die Oberraupe 20, als auch die Unterraupe 21 deutlich geringer ausgeprägt sind, so dass auch in einem anschließenden Dressierverfahren keine Riefenbildung zu erwarten ist. Ferner ist die Schweißnaht über dem Querschnitt wesentlich symmetrischer ausgebildet.

## Patentansprüche

1. Verfahren zur Herstellung eines Vormaterials für ein Zerspanungswerkzeug, insbesondere eines Vormaterials für ein Sägeblatt oder ein Sägeband, wobei man kontinuierlich einen bandförmigen Träger aus einem metallischen Trägermaterial und einen Draht aus einem Schnellarbeitsstahl entlang einer Seitenkante des bandförmigen Trägers zusammenführt und in eine Schweißeinrichtung transportiert und den bandförmigen Träger mit dem Draht zur Erzeugung eines Bimetallbandes entlang der Seitenkante des Trägers verschweißt,
**dadurch gekennzeichnet, dass**
man den bandförmigen Träger und den Draht mit wenigstens einer ersten Schweißeinrichtung, die auf einer Seite des bandförmigen Trägers angeordnet ist, und wenigstens einer zweiten Schweißeinrichtung, die auf der gegenüberliegenden Seite des bandförmigen Trägers angeordnet ist, miteinander verschweißt.

2. Verfahren gemäß Anspruch 1, **dadurch gekennzeichnet, dass** die erste und zweite Schweißeinrichtung in Transportrichtung des bandförmigen Trägers gegeneinander versetzt sind.

3. Verfahren gemäß einem der Ansprüche 1 oder 2, **dadurch gekennzeichnet, dass** die ersten und zweiten Schweißeinrichtungen Laserschweißeinrichtungen sind.

4. Verfahren gemäß einem der Ansprüche 1 bis 3, **dadurch gekennzeichnet, dass** die Leistung der Schweißeinrichtungen steuerbar oder regelbar ist.

5. Verfahren gemäß Anspruch 4, **dadurch gekennzeichnet, dass** man den Winkelverzug und die Schweißnahtüberhöhung des verschweißten Verbunds aus Träger und Draht erfaßt und man die Leistung der gegenüberliegenden ersten und zweiten Schweißeinrichtung so anpaßt, dass der entstehende Winkelverzug und die Schweißnahtüberhöhung minimiert wird.

6. Verfahren gemäß einem der Ansprüche 1 bis 5, **dadurch gekennzeichnet, dass** man die zwischen Träger und Draht erzeugte Schweißnaht vor einem gegebenenfalls vorgesehenen Dressieren des Bimetallbandes nicht spanabhebend bearbeitet.

7. Verfahren gemäß Anspruch 6, **dadurch gekennzeichnet, dass** man das Bimetallband nicht dressiert.

8. Sägeblatt oder Sägeband, **dadurch gekennzeichnet, dass** das Sägeblatt oder Sägeband aus einem Vormaterial besteht, das nach einem Verfahren gemäß einem der Ansprüche 1 bis 7 hergestellt ist.

9. Sägeblatt oder Sägeband gemäß Anspruch 8, **dadurch gekennzeichnet, dass** das Trägermaterial folgende Zusammensetzung aufweist (Angaben in Gew.%):
| | |
|---|---|
| Kohlenstoff (C) | 0,2 bis 1,5 |
| Silicium (Si) | bis 2,0 |
| Mangan (Mn) | bis 2,0 |
| Chrom (Cr) | bis 7,0 |
| Molybdän (Mo) | bis 3,0 |
| Nickel (Ni) | bis 1,5 |
| Vanadium (V) | bis 0,6 |
| Wolfram (W) | bis 5,0 |
Eisen (Fe) und erschmelzungsbedingte Begleitelemente und Verunreinigungen als Rest.

10. Sägeblatt oder Sägeband gemäß einem der Ansprüche 8 oder 9, **dadurch gekennzeichnet, dass** der Schnellarbeitsstahl folgende Zusammensetzung aufweist (Angaben in Gew.%):
| | |
|---|---|
| Kohlenstoff (C) | 0,5 bis 2,5 |
| Silicium (Si) | bis 1,5 |
| Mangan (Mn) | bis 0,8 |
| Chrom (Cr) | 2 bis 6,0 |
| Molybdän (Mo) | bis 11,0 |
| Vanadium (V) | bis 10,0 |
| Wolfram (W) | bis 20,0 |
| Cobalt (Co) | bis 15,0 |
Eisen (Fe) und erschmelzungsbedingte Begleitelemente und Verunreinigungen als Rest,
wobei der Anteil der Elemente Si+V+Mo+W/2 > 5 Gew.% beträgt.
